# EUROPÄISCHE PATENTSCHRIFT

(11) **EP 0 509 110 B1**
(45) Veröffentlichungstag und Bekanntmachung des Hinweises auf die Patenterteilung: **21.06.1995**
(21) Anmeldenummer: 91106025.9
(22) Anmeldetag: 15.04.1991
(51) Int. Cl.: B01J 19/12, H01J 65/04

(54) **Bestrahlungseinrichtung**
Irradation device
Dispositif d'irradiation

(43) Veröffentlichungstag der Anmeldung: 21.10.1992
(73) Patentinhaber: Heraeus Noblelight GmbH, D-63801 Kleinostheim (DE)
(72) Erfinder: Kogelschatz, Ulrich, Dr., CH-5212 Hausen (CH); von Arx, Christoph, CH-4600 Olten (CH)
(74) Vertreter: Kühn, Hans-Christian

(56) Entgegenhaltungen:
- DE-A- 4 022 279
- US-A- 2 189 279
- US-A- 3 049 488
- US-A- 4 266 166

## Beschreibung

### TECHNISCHES GEBIET

Die Erfindung bezieht sich auf eine Bestrahlungseinrichtung für elektrisch nicht- oder nur schwachleitende Substanzen. Sie betrifft insbesondere eine derartige Einrichtung mit mindestens einem Hochleistungsstrahler, vorzugsweise einem Excimer-Strahler, mit einem mit Füllgas gefülltem Entladungsraum, wobei das Füllgas unter Einfluss von stillen elektrischen Entladungen Strahlung, vorzugsweise Excimer-Strahlung, aussendet, der Entladungsraum von Wänden begrenzt ist, mindestens eine Wand aus dielektrischem Material besteht und für die im Entladungsraum erzeugt Strahlung durchlässig ist, mit einem Elektrodenpaar ausserhalb des Entladungsraums, einem unmittelbar an eine der Wände des Entladungsraums angrenzenden Behandlungsraum, und mit einer an die beiden Elektroden angeschlossenen Wechselstromquelle zur Speisung der Entladung, wobei die Ankopplung der elektrischen Energie in den Entladungsraum im wesentlichen kapazitiv durch die zu behandelnde Substanz im Behandlungsraum erfolgt.

Die Erfindung nimmt dabei Bezug auf die DE-A1 40 22 279.

### TECHNOLOGISCHER HINTERGRUND UND STAND DER TECHNIK

UV- und VUV-Hochleistungsstrahler des eingangs genannten Typs wurden erstmals im Vortrag von U.Kogelschatz "Neue UV- und VUV-Excimerstrahler" an der 10. Vortragstagung der Gesellschaft Deutscher Chemiker Fachgruppe Photochemie, Würzburg 18.-20. November 1987 der Öffentlichkeit vorgestellt. Dieser Hochleistungsstrahler kann mit grossen elektrischen Leistungsdichten (1 - 50 KW/m²) und hohem Wirkungsgrad betrieben werden. Seine Geometrie ist in weiten Grenzen dem Prozess anpassbar, in welchem er eingesetzt wird. Die eingangs genannte DE-Offenlegungsschrift vermittelt eine Vorstellung von Bestrahlungseinrichtungen mit derartigen Strahlern. Charakteristisch dabei ist, dass der oder die Behandlungsräume zumindest teilweise von metallischen Elektroden begrenzt werden. In vielen Anwendungen kann es jedoch von Vorteil sein, wenn keine metallische Fläche mit dem zu behandelnden Medium in Kontakt ist. Dies gilt insbesondere dann, wenn es sich um korrosive Medien handelt, oder wenn äusserste Reinheitsgrade angestrebt werden müssen (Reinstwasser-Technik, Pharmaindustrie).

### KURZE DARSTELLUNG DER ERFINDUNG

Der Erfindung liegt die Aufgabe zugrunde, eine Bestrahlungseinrichtung zu schaffen, welche die unmittelbare Einwirkung der Strahlung auf Substanzen und Substanzgemische aller Art ermöglicht.

Diese Aufgabe wird erfindungsgemäss dadurch gelöst, dass der Behandlungssraum allseitig von Wandungen aus nichtmetallischem Material oder aus mit nichtmetallischem Material lückenlos beschichtetem Material abgeschlossen ist.

Der Verzicht auf metallische Teile im Behandlungsraum erweitert den Einsatzbereich der Bestrahlungsvorrichtung bedeutend. Es können auch aggressive oder toxische Substanzen bestrahlt werden. Insbesondere bei photolytischen Prozessen sich leicht bildende Niederschläge können von den Wänden des Behandlungsraums wieder entfernt werden, indem eine Reinigungsflüssigkeit, z.B. eine Säure, durch den Behandlungsraum gespült wird.

Weitere Vorteile der Erfindung und Ausführungsbeispiele werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein erstes Ausführungsbeispiel der Erfindung in Gestalt einer zylindrischen Bestrahlungseinrichtungs im Längsschnitt mit einem den Bestrahlungsraum konzentrisch umgebenden eigenständigen Behandlungsraum;
- Fig.2: einen Querschnitt durch die Bestrahlungseinrichtung gemäss Fig.1 längs deren Linie AA;
- Fig.3: ein zweites Ausführungsbeispiel einer zylindrischen Bestrahlungseinrichtung mit einem äusserem Behandlungsraum im Längschnitt;
- Fig.4: einen Querschnitt durch die Bestrahlungseinrichtung gemäss Fig.3 längs deren Linie BB;

### WEGE ZUR AUSFÜHRUNG DER ERFINDUNG

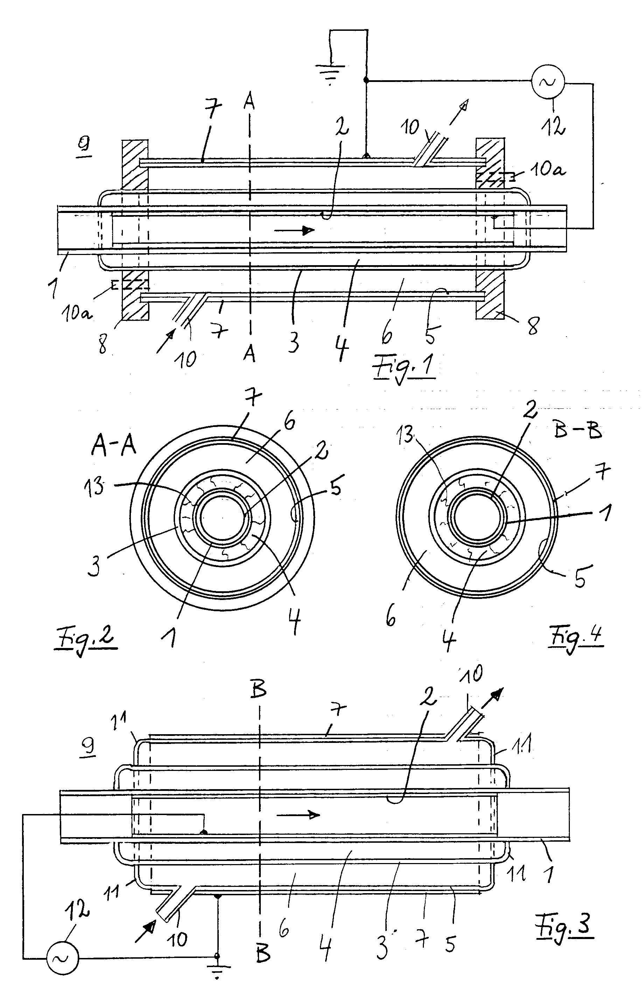

Die Bestrahlungseinrichtung nach Fig. 1 und 2 umfasst ein inneres Dielektrikumsrohr 1, z.B. ein Glas- oder Quarzrohr 1, das im Inneren mit einer Metallschicht 2, vorzugsweise einer Aluminium-Schicht, versehen ist. Diese Schicht 2 bildet die Innenelektrode des Strahlers. Das innere Rohr 1 ist konzentrisch und vom diesem distanziert vom einem mittleren Dielektrikumsrohr 3, das aus einem UV-transparentem Material, z.B. Quarz, besteht, umgeben. Der Raum zwischen den beiden Rohren 1 und 3 bildet den Entladungsraum 4 des Strahlers. Nach aussen hin ist der Entladungsraum 4 begrenzt durch ein äusseres Rohr 5 aus dielektrischem Material, z.B. Glas oder Quarz. Der Raum zwischen dem Rohr 3 und dem Rohr 5 bildet den Behandlungsraum 6 der Bestrahlungseinrichtung. Eine zweite Metallschicht 7, vorzugsweise aus Aluminium, ist auf die Aussenfläche des Rohres 6 aufgebracht und bildet die Aussenelektrode des Strahlers.

Während die beiden Enden des mittleren Rohres 3 gasdicht mit dem inneren Rohr 1 verbunden, z.B.verschmolzen sind, ist das äussere Rohr 5 samt Beschichtung 7 beidseitig in einer Dichtscheibe 8 gehalten. Diese besteht aus einem gummielastischen Material oder einem anderem Isoliermaterial, z.B. PFTE (Polyfluortretraethylen), das den Behandlungsraum 6 vom Aussenraum 9 gasdicht abtrennt. Bei Verwendung eines wenig elastischen Material sind dann Dichtringe (nicht eingezeichnet) zwischen . Für die Zu- und Abfuhr des zu behandelnden Mediums sind im äusseren Rohr 5 zwei Stutzen 10 vorgesehen. Anstelle über Stutzen 10 im äusseren Rohr 5 kann die Zu- und Abfuhr auch durch die Dichtscheiben 8 erfolgen. Dies ergibt einen vereinfachten Aufbau des äusseren Rohres 5. Diese Variante ist in Fig.1 durch strichliert eingezeichnete Stutzen 10a in beiden Dichtscheiben 8 verdeutlicht. Der beschriebene Aufbau ermöglicht es, den Behandlungsraum 6 vom Entladungsraum 4 einfach zu trennen, um z.B. Reinigungsarbeiten oder ähnliches durchzuführen.

Beim Umgang mit hochtoxischen Gases kann es vorteilhaft sein, die Anzahl Dichtungen auf das absolute Miniumum zu schränken. Dies ist in Fig.3 und 4 beispielsweise dadurch verwirklicht, dass anstelle der Dichtscheiben 8 der Ausführungsform gemäss Fig.1 bzw. 2 die Enden 11 des äusseren Rohres 5 nach innen gezogen und mit dem mittleren Rohr 3 gasdicht verbunden, z.B. verschmolzen sind. Bei einem solchen Aufbau der Bestrahlungseinrichtung treten nur noch überschaubare Dichtprobleme auf. Ansonsten entspricht der Aufbau demjenigen der Fig.1 und 2, was durch diesselben Bezugszeichen für gleiche Teile dokumentiert ist.
Bei beiden Ausführungsformen der Bestrahlungseinrichtung kann durch den Innenraum des inneren Rohres 1 ein Kühlmedium geleitet werden. Für die Zerstörung gewisser gasförmiger Komponenten kann es demgegenüber von Vorteil sein, den Strahler nicht (zwangs-)zu kühlen, was insbesondere mit der Quarzapparatur gemäss Fig.3 sehr gut möglich ist.

Die Anspeisung der Entladung im Entladungsraum 4 erfolgt durch eine Wechselstromquelle 12 mit einstellbarer Frequenz und Amplitude, die an beide Elektroden 2 und 7 angeschlossen ist. Die Wechselstromquelle 12 entspricht grundsätzlich jenen, wie sie zur Anspeisung von Ozonerzeugern verwendet werden. Typisch liefert sie eine einstellbare Wechselspannung in der Grössenordnung von mehreren 100 Volt bis 20000 Volt bei Frequenzen im Bereich des technischen Wechselstroms bis hin zu einigen MHz - abhängig von der Elektrodengeometrie, Druck im Entladungsraum und Zusammensetzung des Füllgases.

Der Entladungsraum 4 zwischen den Rohren 1 und 3 ist mit einem unter Entladungsbedingungen Strahlung aussendenden Füllgas gefüllt, z.B. Quecksilber, Edelgas, Edelgas-Metalldampf-Gemisch, Edelgas-Halogen-Gemisch, gegebenenfalls unter Verwendung eines zusätzlichen weiteren Edelgases, vorzugsweise Ar, He, Ne, Xe als Puffergas.

Je nach gewünschter spektraler Zusammensetzung der Strahlung kann dabei eine Substanz/Substanzgemisch gemäss nachfolgender Tabelle Verwendung finden:

| Füllgas | Strahlung |
|---|---|
| Helium | 60 - 100 nm |
| Neon | 80 - 90 nm |
| Argon | 107 - 165 nm |
| Argon + Fluor | 180 - 200 nm |
| Argon + Chlor | 165 - 190 nm |
| Argon+Krypton+Chlor | 165 - 190 nm, 200 - 240 nm |
| Xenon | 120 - 190 nm |
| Stickstoff | 337 - 415 nm |
| Krypton | 124 nm, 140 - 160 nm |
| Krypton + Fluor | 240 - 255 nm |
| Krypton + SF₆ + Ar | 240 nm - 255 nm |
| Krypton + Chlor | 200 - 240 nm |
| Quecksilber | 185 nm, 254 nm, 295 - 315 nm 365 nm, 366 nm |
| Selen | 196, 204, 206 nm |
| Deuterium | 150 - 250 nm |
| Xenon + Fluor | 340 - 360 nm, 400 - 550 nm |
| Xenon + Chlor | 300 - 320 nm |

Daneben kommen eine ganze Reihe weiterer Füllgase in Frage:
- Ein Edelgas (Ar, He, Kr, Ne, Xe) oder Hg mit einem Gas bzw. Dampf aus F₂, J₂, Br₂, Cl₂ oder eine Verbindung, die in der Entladung ein oder mehrere Atome F, J, Br oder Cl abspaltet;
- ein Edelgas (Ar, He, Kr, Nr, Xe) oder Hg mit O₂ oder einer Verbindung, die in der Entladung ein oder mehrere O-Atome abspaltet;
- ein Edelgas (Ar, He, Kr, Ne, Xe) mit Hg.

Bei Anliegen einer Spannung zwischen den Elektroden 2 und 7 bildet sich eine Vielzahl von Entladungen 13 (nur in Fig.2 bzw. 4 eingezeichnet) im Entladungsraum 4 aus. In diesen Entladungen kann die Elektronenenergieverteilung durch Dicke des dielektrischen Rohrs 1 bzw. 3, Abstand der Rohre, Druck und/oder Temperatur optimal eingestellt werden. Die Entladungen strahlen das UV-Licht ab, das dann durch das UV-transparente Rohr 3 in den unmittelbar angrenzenden Behandlungsraum 6 dringt.

Durch den Behandlungsraum 6 wird die zu bestrahlende Substanz geleitet. Diese Substanz kann gasförmig oder flüssig sein. Wesentlich bei flüssigen Substanzen ist, dass sie eine genügend hohe Dielektrizitätskonstante aufweisen, um die Energie von der äusseren Elektrode 7 durch den Behandlungsraum 6 in den Entladungsraum 4 einkoppeln zu können.

Da die Erfindung vorzugsweise für die Bestrahlung von wässrigen Substanzen vorgesehen ist, ist diese Bedingung allemal erfüllt: Infolge seiner hohen Dielektrizitätskonstanten herrschen in Wasser (bzw. wässrigen Substanzen) nur niedrige elektrische Feldstärken, so dass der grösste Teil der zwischen den Elektroden 2 und 7 angelegten Spannung am Entladungsraum 4, also zwischen den Dielektrikumsrohren 1 und 3, liegt und die Entladung treibt. Die beiden Elektroden 2 und 7 dienen gleichzeitig als Spiegel für die UV-Strahlung, weil bekanntlich Aluminiumschichten gut UV-Strahlung reflektieren.

Anstelle von Wasser oder wässrigen Substanzen kann natürlich auch jede andere Flüssigkeit, Emulsion oder sogar ein Gas bestrahlt werden, das die vorgenannten Voraussetzungen erfüllt. Wird ein Gas verwendet, ist lediglich darauf zu achten, dass die Zündspannung im Entladungsraum 5 kleiner ist als die im Gas des Behandlungsraums. Durch geeignete Wahl von Druck und Spaltweite, insbesondere im Entladungsraum, ist dies stets zu erreichen:
Im ungezündeten Zustand verhält sich die beschriebene Anordnung wie ein kapazitiver Spannungsteiler. Die einzelnen Teilspannungen an den Dielektrika und den Gasspalten lassen sich nach den Kapazitätsformeln für Zylinderkondensatoren berechnen. Dabei ist zu berücksichtigen, dass Quarz eine Dielektrizitätskonstante von ε=3,7 hat, während für alle Gase mit hinreichender Genauigkeit ε=1 angenommen werden kann. Der überwiegende Teil der Spannung liegt an den Gasstrecken, wobei sich annähernd gleiche elektrische Feldstärken für den Entladungsraum und den Behandlungsraum ergeben.
Nimmt man z.B. Luft bei einem Druck von 1 bar im Behandlungsraum von 2mm Breite an, so ergibt sich nach den bekannten Durchschlagskurven für Luft eine Zündfeldstärke von knapp 40 kV/cm. Wählt man einen Xenon-Excimer-Strahler als UV-Quelle mit einem Fülldruck unter 0,3 bar und einem Entladungsspalt von 5 mm Breite, so ergibt sich im Xenon eine Zünsfeldstärke von etaw 9 kV/cm. Es lassen sich also leicht Spannungsbereiche finden, bei denen die Gasentladung im Xenon brennt, ohne dass der zu bestrahlende Luftspalt zündet. Andererseits können bei der Bestrahlung von Gasen oder Gasgemischen durch Erhöhung der an den Elektroden 2 und 7 angelegten Wechselspannung stille elektrische Entladungen im Behandlungsraum 6 erzwungen werden. So wird daszu behandelnde Gas zusätzlich der Wirkung von energiereichen Elektronen, Ionen und angeregten Atomen bzw. Molekülen ausgesetzt. Diese kombinierte Einwirkung von harter UV-Strahlung und einer elektrischen Entladung ist insbesondere zum Abbau relativ schwer spaltbarer Substanzen geeignet.

Ohne den durch die Erfindung gesteckten Rahmen zu verlassen, sind eine Reihe von Abwandlungen möglich:
Anstelle von mit Metallschichten 2, 7 beschichteten Rohren 1 bzw. 5 aus dielektrischem Material können auch Metallrohre verwendet werden, die - beim inneren Rohr 1 aussen, beim äusseren Rohr 5 mit einer dielektrischen Schicht versehen sind. Im Falle des äusseren Rohres 5 muss sich diese Schicht über die gesamte, dem Behandlungsraum 6 zugewandte Oberfläche lückenlos erstrecken, damit die "Metallfreiheit" des Behandlungsraums 6 sichergestellt ist.

Die vorstehenden Ausführungen bezogen sich im wesentlichen allesamt auf Strahler mit zylindrischen Geometrien. Die Erfindung ist selbstverständlich nicht auf solche beschränkt. Die der Erfindung zugrundeliegende Lehre lässt sich ohne weiteres auch auf Konfigurationen mit planen Dielektrika, vorzugsweise Quarzplatten anwenden.

## Patentansprüche

1. Bestrahlungseinrichtung mit mindestens einem Hochleistungsstrahler, vorzugsweise einem Excimer-Strahler, mit einem mit Füllgas gefülltem Entladungsraum (4), wobei das Füllgas unter Einfluss von stillen elektrischen Entladungen Strahlung, vorzugsweise Excimer-Strahlung, aussendet, der Entladungsraum (4) von Wänden begrenzt ist, wovon mindestens die eine Wand aus dielektrischem Material besteht und für die im Entladungsraum erzeugte Strahlung durchlässig ist, einem unmittelbar an die eine Wand des Entladungsraums (4) angrenzenden Behandlungsraum (6), mit einem Elektrodenpaar (2,7) ausserhalb des Entladungsraums (4) und mit einer an die beiden Elektroden (2,7) angeschlossenen Wechselstromquelle (12) zur Speisung der Entladung, wobei die Ankopplung der elektrischen Energie in den Entladungsraum (4) im wesentlichen kapazitiv durch die zu behandelnde Substanz im Behandlungsraum (6) erfolgt, dadurch gekennzeichnet, dass der Behandlungssraum (6) allseitig von Wandungen aus nichtmetallischem Material oder aus mit nichtmetallischem Material lückenlos beschichtetem Material abgeschlossen ist.

2. Bestrahlungseinrichtung nach Anspruch 1, dadurch gekennzeichnet, dass das Füllgas Quecksilber, Stickstoff, Selen, Deuterium oder ein Gemisch dieser Substanzen allein oder mit einem Edelgas ist.

3. Bestrahlungseinrichtung nach Anspruch 2, dadurch gekennzeichnet, dass das Gas Beimengungen von Schwefel, Zink, Arsen, Selen, Cadmium, Jod oder Quecksilber enthält.

4. Bestrahlungseinrichtung nach einem der Ansprüche 1 bis 3, dadurch gekennzeichnet, dass ein inneres Rohr (1) aus dielektrischem Material auf seiner Innenseite mit einer ersten Elektrode (2) versehen ist, dass das innere Rohr (1) von einem mittleren Rohr (3) aus dielektrischem Material konzentrisch und vom inneren Rohr (1) beabstandet umgeben ist, und dass das mittlere Rohr (3) seinerseits von einem äusseren Rohr (5) aus nichtmetallischem Material konzentrisch und vom mittleren Rohr beabstandet umgeben ist, welches äussere Rohr (5) aussen mit einer zweiten Elektrode (7) versehen ist.

5. Bestrahlungseinrichtung nach Anspruch 4, dadurch gekennzeichnet, dass die beiden Enden des äusseren Rohres (5) in einer Dichtscheibe (8) gasdicht gehalten sind, welche Dichtscheibe (8) gasdicht auf das mittlere Rohr (3) aufgeschoben ist.

6. Bestrahlungseinrichtung nach einem der Ansprüche 1 bis 4, dadurch gekennzeichnet, dass die beiden Enden (11) des äusseren Rohres (5) nach innen gezogen und mit dem mittleren Rohr (3) gasdicht verbunden sind, wobei vorzugsweise sowohl das innere, das mittlere als auch das äussere Rohr aus Quarz besteht.

7. Bestrahlungseinrichtung nach einem der Ansprüche 1 bis 5, dadurch gekennzeichnet, dass das innere Rohr (1) und/oder das äussere Rohr (5) aus Metall bestehen, wobei das innere Rohr auf der dem Entladungsraum (4) zugewandten Seite und das äussere Rohr (5) auf der dem Behandlungsraum zugewandten Seite vollstänig mit einer Schicht aus dielektrischen Material versehen sind.

8. Bestrahlungseinrichtung nach einem der Ansprüche 1 bis 7, dadurch gekennzeichnet, dass das die Enden des mittleren Rohres (3) nach innen gezogen sind und mit dem inneren Rohr (1) gasdicht verbunden sind.

## Claims

1. An irradiation apparatus with at least one high-power radiating device, preferably an excimer radiating device, with a discharge chamber (4) filled with filling gas, in which the filling gas emits radiation, preferably excimer radiation, under the influence of silent electrical discharges, the discharge chamber (4) is delimited by walls, at least one wall of which consists of dielectric material and is penetrable by the radiation produced in the discharge chamber, with a processing chamber (6) immediately adjoining one wall of the discharge chamber (4), with a pair of electrodes (2,7) outside the discharge chamber (4) and with an alternating current source (12) connected to the two electrodes (2,7) to supply the discharge, in which the coupling of the electrical energy into the discharge chamber (4) takes place substantially capacitively through the substance to be treated in the processing chamber (6), characterised in that the processing chamber (6) is closed off on all sides by walls of non-metallic material or of material coated without interruption with non-metallic material.

2. An irradiation apparatus according to Claim 1, characterised in that the filling gas is mercury, nitrogen, selenium, deuterium or a mixture of these substances alone or with a noble gas.

3. An irradiation apparatus according to Claim 2, characterised in that the gas contains admixtures of sulphur, zinc, arsenic, selenium, cadmium, iodine or mercury.

4. An irradiation apparatus according to one of Claims 1 to 3, characterised in that an internal tube (1) of dielectric material is provided on its inner side with a first electrode (2), that the internal tube (1) is surrounded by a central tube (3) of dielectric material concentrically and at a distance from the internal tube (1), and that the central tube (3) is in turn surrounded by an external tube (5) of non-metallic material concentrically and at a distance from the central tube, which external tube (5) is provided externally with a second electrode (7).

5. An irradiation apparatus according to Claim 4, characterised in that the two ends of the external tube (5) are held in a gas-tight manner in a sealing disc (8), which sealing disc (8) is pushed in a gas-tight manner onto the central tube (3).

6. An irradiation apparatus according to one of Claims 1 to 4, characterised in that the two ends (11) of the external tube (5) are drawn inwards and are connected in a gas-tight manner with the central tube (3), in which preferably all of the inner, the central and the external tube consist of quartz.

7. An irradiation apparatus according to one of Claims 1 to 5, characterised in that the internal tube.(1) and/or the external tube (5) consist of metal, in which the internal tube on the side facing the discharge chamber (4) and the outer tube (5) on the side facing the processing chamber are completely provided with a layer of dielectric material.

8. An irradiation apparatus according to one of Claims 1 to 7, characterised in that the ends of the central tube (3) are drawn inwards and are connected in a gas-tight manner with the internal tube (1).

## Revendications

1. Dispositif d'irradiation comportant au moins un organe d'irradiation de forte puissance, de préférence un organe d'irradiation excimère, une chambre de décharge (4) remplie de gaz de remplissage, le gaz de remplissage émettant, sous l'action de décharges électriques obscures, un rayonnement, de préférence un rayonnement excimère, la chambre de décharge (4) étant limitée par des parois, dont au moins une paroi est en matériau diélectrique et est transparente au rayonnement généré dans la chambre de décharge, une chambre de traitement (6) immédiatement adjacente à la paroi de la chambre de décharge (4), une paire d'électrodes (2, 7) à l'extérieur de la chambre de décharge (4) et une source de courant alternatif (12) reliée aux deux électrodes (2, 7) en vue de l'alimentation de la décharge, le couplage de l'énergie électrique dans la chambre de décharge (4)s'effectuant de façon essentiellement capacitive par l'intermédiaire de la substance à traiter dans la chambre de traitement (6), caractérisé en ce que la chambre de traitement (6) est fermée de toutes parts par des parois en matériau non métallique ou en matériau revêtu sans lacunes de matériau non métallique.

2. Dispositif d'irradiation selon la revendication 1, caractérisé en ce que le gaz de remplissage est du mercure, de l'azote, du sélénium, du deutérium ou un mélange de ces substances seules ou avec un gaz rare.

3. Dispositif d'irradiation selon la revendication 2, caractérisé en ce que le gaz contient des additions de soufre, de zinc, d'arsenic, de sélénium, de cadmium, d'iode ou de mercure.

4. Dispositif d'irradiation selon l'une des revendications 1 à 3, caractérisé en ce qu'un tube intérieur (1) en matériau diélectrique est muni sur son côté intérieur d'une première électrode (2), en ce que le tube intérieur (1) est entouré concentriquement par un tube intermédiaire (3) en matériau diélectrique et à distance du tube intérieur (1), et en ce que le tube intermédiaire (3) est de son côté entouré par un tube extérieur (5) concentriquement par un tube extérieur (5) en matériau non métallique et écarté du tube intermédiaire, lequel tube extérieur (5) est muni extérieurement d'une seconde électrode (7).

5. Dispositif d'irradiation selon la revendication 4, caractérisé en ce que les deux extrémités du tube extérieur (5) sont maintenues de façon étanche aux gaz dans un disque d'étanchéité (8), disque d'étanchéité (8) qui est glissé de façon étanche aux gaz sur le tube intermédiaire (3).

6. Dispositif d'irradiation selon l'une des revendications 1 à 4, caractérisé en ce que les deux extrémités (11) du tube extérieur (5) sont tirées vers l'intérieur et sont réunies de façon étanche aux gaz au tube intermédiaire (3), de préférence non seulement le tube intérieur, le tube intermédiaire, mais également le tube extérieur est en quartz.

7. Dispositif d'irradiation selon l'une des revendications 1 à 5, caractérisé en ce que le tube intérieur (1) et/ou le tube extérieur (5) sont en métal, le tube intérieur sur le côté tourne vers la chambre de décharge (4) et le tube extérieur (5) sur le côté tourné vers la chambre de traitement sont munis entièrement d'une couche en matériau diélectrique.

8. Dispositif d'irradiation selon l'une des revendications 1 à 7, caractérisé en ce que les extrémités du tube intermédiaire (3) sont tirées vers l'intérieur et sont réunies de façon étanche aux gaz avec le tube intérieur (1).
